(19) **Europäisches Patentamt**

**European Patent Office**

**Office européen des brevets**

(11) **EP 0 983 977 B1**

(12) **EUROPEAN PATENT SPECIFICATION**

(45) Date of publication and mention
of the grant of the patent:
**30.06.2004 Bulletin 2004/27**

(51) Int Cl.⁷: **C04B 26/02**, B32B 27/20

(21) Application number: **97914608.1**

(86) International application number:
**PCT/JP1997/001169**

(22) Date of filing: **04.04.1997**

(87) International publication number:
**WO 1998/045220 (15.10.1998 Gazette 1998/41)**

(54) **ARTIFICIAL STONE**

KUNSTSTEIN

PIERRE ARTIFICIELLE

(84) Designated Contracting States:
**DE FR GB IT NL SE**

(43) Date of publication of application:
**08.03.2000 Bulletin 2000/10**

(73) Proprietor: **Doppel Co. Ltd.**
**Tokyo 102-0085 (JP)**

(72) Inventor: **SAKAI, Mieko, Doppel Co., Ltd**
**Tokyo 102 (JP)**

(74) Representative: **Matthews, Derek Peter et al**
**Frank B. Dehn & Co.,**
**European Patent Attorneys,**
**179 Queen Victoria Street**
**London EC4V 4EL (GB)**

(56) References cited:
**WO-A-96/13469**          **JP-A- 6 087 641**
**JP-A- 6 228 321**          **JP-A- 6 345 506**
**JP-A- 60 137 862**          **JP-A- 61 143 133**
**JP-B- 5 036 388**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to an artificial stone. More specifically, the present invention relates to a novel improved high-density artificial stone which has a granite-like or marble-like excellent texture and excellent properties such as a good surface hardness, a good surface abrasion resistance and the like, which is light-weight and has a high hardness and a high strength, and which can easily be adjusted to a desired thickness at a low cost. The invention also provides an artificial stone which is useful as a wall material, a floor material, other building material, material for construction, a stone pillar or the like.

BACKGROUND

It is known to pulverise a natural stone to an appropriate size, and mix with calcium carbonate and a resin, and then cure to form an artificial stone. That is, it has been stated that a starting stone powder, a resin and the like are mixed under reduced pressure, and the mixture is poured into a mold, withdrawn therefrom and cut.

Further, it is also known that when an artificial stone is produced using a powder of a natural stone and a synthetic resin, it is required that the starting materials are used at a predetermined mixing ratio and these are thoroughly pressurized after they are put into a mold.

However, artificial stones obtained by these conventional methods involve a problem that the colour and depth are not necessarily satisfactory even if using natural stone powder.

Conventional artificial stone has a defect that the colour tone of the surface always becomes dull. Thus, in the past, it was quite difficult to realize a transparent, deep and massy granite-like or marble-like surface.

This is presumably because characteristics of light reflection or absorption on a surface of an artificial stone vary greatly depending on the composition and the size and the formulation of the artificial stone powder, but such a hypothesis has not been heretofore studied in detail.

The composition of the artificial stone greatly influences moldability. There are problems that fluidity for molding is lost depending on the size or amount of natural stone powder to be incorporated into the artificial stone, the ratio of binder resin or the like and the presence of bubbles inside a molded product, which impair certain qualities and the strength of a product artificial stone.

It has been proposed to increase the amount of resin component to improve fluidity and prevent occurrence of bubbles.

However, increasing the amount of resin component to prevent occurrence of bubbles and secure fluidity for feeding into a mold has an adverse effect on qualities of a resulting artificial stone.

The use of the resin component in a large amount leads to production of a resinous artificial stone product, and the resulting product is nothing more than one in which an artificial stone powder is present in a resin. Further, in view of properties, the product is closer to the starting resin than to the starting stone. Accordingly, although the resulting stone is called an artificial stone, the resulting product is merely a resin product that looks like a stone.

WO 96/13469 describes an artificial stone having a deep color tone, gloss and high-density uniform texture. A 10-70 mesh inorganic particulate component accounts for not less than 85 wt.% of a product, a resin component accounting for less than 15 wt.% thereof. The surface of the fine particle component is partially or wholly coated with an organic material and cured in advance. In the artificial stone, all the components are composed uniformly, and the fine particle component is exposed in an outer surface of the stone by being polished.

The inventors of the present application have provided a composition comprising an inorganic material component formed from a fine powder component having particles of larger diameter and a finely divided component having particles of smaller diameter and a resin component the amount of which is approximately 11% by weight or less of the novel artificial stone. When a powder of a natural stone or the like is used as the inorganic material the resulting product is of a dense texture, has characteristics such as a transparent colour tone, a deep feeling and a tone of a natural stone such as granite, marble or the like and is readily moldable so that a variety of shapes such as a plate, a bar or the like can be provided.

This artificial stone has attracted attention as a stone which is excellent in colour tone.

However, in later studies, a problem has remained that when attempts are made to provide this new artificial stone composition with depth, costs are increased in the formulation and production of the inorganic material component.

DISCLOSURE OF INVENTION

In view of the above-mentioned circumstances, the present invention has been made. In order to solve the above-mentioned problems, the sum of a fine powder component of an inorganic material having a size of from 0.201 to 4 mm (5 to 70 mesh) and a finely divided component of an inorganic material of smaller that 0.147 mm (100-mesh) is 89% by weight or more based on the total amount of the artificial stone product.

It provides an artificial stone comprising an artificial stone mixture containing an inorganic material mixture component comprising a fine powder component of an inorganic material having a size of from 0.201 to 4 mm (5 to 70 mesh), a finely divided component of an inorganic material of smaller than 0.147 mm (100 mesh) and a resin monomer component in which the sum of the fine powder component of the inorganic material and the finely divided component of the inorganic material is 89% by weight or more based on the weight of the stone mixture and the amount of resin monomer component is 11% by weight or less based on the weight of the stone mixture, the finely divided component of an inorganic material comprises a luminous or fluorescent material and wherein the relationship of the weight $(W_1)$ of the above-mentioned fine powder component of the inorganic material, the weight $(W_2)$ of the finely divided component of the inorganic material and the weight $(W_3)$ of the luminous or fluorescent component is as follows

$$W_1 : (W_2 + W_3) = 1:2 \text{ to } 5:1$$

$$W_2 : W_3 = 1:2 \text{ to } 10:1;$$

said stone mixture being struck and integrated into a cured slab.

Further, the present invention provides a process for the preparation of an artificial stone as hereinbefore defined characterized in that the artificial stone mixture above is struck and integrated into a cured slab.

BRIEF DESCRIPTION OF DRAWINGS

Figure 1 is a flow chart showing production of an artificial stone of the present invention. Figure 2 is another flow chart.

Figures 3 and 4 are partial perspective views showing the other examples of production respectively.

BEST MODE FOR CARRYING OUT THE INVENTION

The mode for carrying out the present invention is described in more detail below.

First of all, the starting material for the artificial stone of the present invention is roughly composed of three components. One thereof is a fine powder component of an inorganic material having a size of from 0.201 to 4 mm (5 to 70 mesh) - a main component. This is a fine powder component of an appropriate inorganic material selected from minerals such as silica rock, chrysolite, feldspar, pyroxene, mica and the like, natural stones such as granite, metamorphite and the like, porcelain, glasses, metals and the like.

Along with this fine powder component, a finely divided component comprising a luminous or fluorescent material and having a size of smaller than 0.147 mm (100 mesh) is used. As this finely divided component, various natural or artificial finely divided components may be employed. For example, powders of calcium carbonate, aluminum hydroxide and the like are easily obtainable finely divided components.

Further, as a part of this finely divided component, a component such as manganese dioxide, titanium dioxide, zirconium silicate, iron oxide or the like to adjust a colour tone, or a component such as antimony trioxide, a boron compound, a bromine compound or the like to impart a flame retardance may be blended.

A resin monomer component is mentioned as a third component. This resin monomer component is cured after being struck and integrated, and it can be selected from a wide variety of thermosetting materials.

For example, this component constitutes an acrylic resin, a methacrylic resin, an unsaturated polyester resin or the like. Examples thereof include monomers such as an acrylate ester, a methacrylate ester and the like. Especially, from the standpoint of a colour tone, physicochemical properties and the like of the artificial stone after the curing, methyl methacrylate is typically employed.

The fine powder component of a natural stone or the like acts as a main factor in the appearance and physical properties of the resulting artificial stone. When a part thereof is exposed to the surface, it becomes a main factor in the colour or pattern of the surface.

The size of the finely divided component is much smaller than the 0.147 mm (100 mesh) level in comparison to the fine powder component. The finely divided component enters between the individual particles of the fine powder component and is arranged to fill the space between the particles, contributing toward providing properties such as a hardness and a pliability of the resulting artificial stone. The weight ratio of the fine powder component and the finely divided component is preferably between 0.5:1 and 5:1.

Further, the resin component contributes to covering the fine powder component and the finely divided component of a natural stone or the like to bind the whole body, and functions to impart a resilience or a tensile strength to a product when an artificial stone is completed.

In the present invention, the structural ratio of these components is important. Especially important is the structural ratio of the resin component and the other components.

In the present invention, one of the characteristics is that a high-density product having a dense texture can be provided. The "high-density" here referred to means that the fine powder component and the finely divided component contained in the artificial stone product are present at a high density. The degree thereof is that the density is, for example, 2.2 g/cm$^3$ or more exceeding the range included in conventional artificial stone.

That is, the higher the structural ratio of the fine powder component of a natural stone or the like as an aggregate component in the product, the closer the product to natural stone. However, when the ratio is too high, a product does not solidify, and it cannot be used as a commercial product. Further, physical properties of the resulting product are poor, and it cannot endure ordinary use.

Further, when the ratio of the finely divided component is too high, the product does not solidify. Besides, the resulting product is not glazed, and it can hardly be said to be a stone.

Accordingly, the amount of the fine powder component and the finely divided component is limited. That is, the amount has to be 89% by weight or more, preferably 90% or more. When it exceeds 95%, the product becomes brittle, and is hard to use. When it is less than 89%, the product is too soft to provide qualities as a stone, and it is used in the same range as a resin plate.

This means that the component other than the fine powder component and the finely divided component of a natural stone and the like, namely, the resin component should not be present in the product in an amount exceeding 11% by weight.

When the amount of the resin component exceeds 11%, the product is like plastic, and it is only seemingly an artificial stone. Further, when the amount of the resin component is excessively decreased, a product comes to have an appearance close to a natural colour, but it becomes brittle and is unsuitable for actual use. From this standpoint, the amount of the resin component is more preferably between 3 and 10% by weight.

In the artificial stone mixture of the present invention, it is one of the characteristics that a part or the whole of the above-mentioned fine powder component of the inorganic material is transparent particles and the particles are previously coated with an inorganic or organic material.

Such a coating of the transparent fine powder component is achieved by coating the surface of the transparent fine powder component with a resin and curing the same, or by baking an inorganic material such as a water glass, a glazing agent for porcelain or the like and coating the same thereon. In either case, a coating with a thickness of from several micrometers to several tens of micrometers, for example, from 5 to 50 μm, more preferably from 20 to 30 μm is applied to the surfaces of the particles of the transparent fine powder component. More specifically, an inorganic material coating can be applied by, for example, heating a composition of an acrylic resin, a methacrylic resin, an unsaturated polyester resin or the like at from 150 to 300°C or irradiating the same with light to coat the resin composition on the surfaces of the particles of the fine powder component and cure the same, or conducting the baking at a high temperature of from 800 to 1,100°C using a water glass, a glazing agent or the like.

Further, the mixing of the fine powder component with the resin component increases strength and gives a good surface hardness.

It is further important that since the above-mentioned transparent natural stone or the like is used as the fine powder component and the above-mentioned hard coating is applied to the surface thereof, this coated layer is partially broken by polishing the surface of the artificial stone product. Then, the surface structure between the particles of the partially exposed transparent fine powder component of the inorganic material and the surrounding coated layer comes to have a peculiar effect by light reflection.

That is, light enters into the transparent fine powder component, reflects on the surrounding coated layer, permeates again through the transparent fine powder component, and reflects. Such a phenomenon of permeation and reflection is substantially different from ordinary reflection on a surface of an artificial stone, and gives a peculiar deep feeling to the artificial stone product of the present invention. A massy, deep, high-quality marble-like artificial stone is obtained.

The amount of the transparent fine particle component having the coated layer as mentioned above can be generally between 10 and 100% based on the total amount of the fine powder component of the inorganic material contained in the composition.

In the present invention, it is necessary that the fine powder component of the inorganic material has the specific size as noted above. That is, the fine powder component of the inorganic material has a size of from 0.201 to 4 mm (5 to 70 mesh) as mentioned above. It is advisable to use the same size except in special cases. When an upper or lower portion is coloured dark using coloured and colourless materials, it is considered that the size of fine particles is changed depending on the coloured or colourless condition. However, fine particles which are extremely different in the size shall not be used in large amounts because they deteriorate the strength of the product.

Meanwhile, the size of particles of the finely divided component is smaller than 0.147 mm (100 mesh) as noted above. The particles of the finely divided component have to be fully incorporated between the particles of the fine powder component. Accordingly, particles having a size close to that of the particles of the fine powder component are undesirable. More specifically, the size is preferably between 150 and 250 mesh.

What is important in the artificial stone of the present invention is that the artificial stone mixture is preferably dispersed uniformly in any portions of the cured portion after the striking except in special cases.

It is advisable to polish the outer surface of the cured portion. That is, it is advisable that the partially broken fine powder component of the coated layer is exposed to at least a part of the surface as mentioned above.

Polishing is a practically convenient method for exposing to the surface a dense texture provided by the deep, high-density artificial stone of the present invention. It is of course possible that a part of a surface of a product is polished to expose a fine powder component and a difference between this portion and the other portion of the same surface is used as a pattern.

In the case of obtaining an artificial stone, it is an important subject what colour or design a targeted natural stone has. Granite or marble are often targeted because a product from a natural stone is hard to obtain and the colour and the glaze are beautiful. In this instance, the colour and the glaze are important subjects in determining the value of granite or marble. Natural granite or marble has a vide variety of colours, namely, from black to a white or red colour, and even one colour is different in colour tone.

Usually, when various artificial stones are coloured, for example, when a black one is obtained, only a black powder of a natural stone or the like can be used. However, when a stone of a neutral colour is obtained, reproducibility is an issue. Further, even if a colour was applied, it was difficult to give the glaze peculiar to marble.

For example, even when a colour was applied using a dye or a pigment, it was difficult to give a glaze or depth.

On the other hand, in the present invention, a transparent component is used as a fine powder component. For example, when a product having a granite-like or marble-like glaze is provided, a fine powder obtained by pulverizing a quartz-type natural stone can be used as the fine powder component.

Since a starting material of the fine powder obtained by pulverizing the quartz-type natural stone is a quartz type, the surface has a peculiar smooth portion. Further, it is colourless and transparent in many cases. When it is coloured, the colour tone is not strong. When it is not completely transparent, a partial transparency still remains in many cases.

When this starting material is used, the colour of the cured portion which has been struck and cured can be controlled by the colour tone of the coated layer in the fine powder component and the resin component, and it can be deeply coloured and glazed by the presence of the transparent quartz-type fine powder component.

For example, a baked layer of a water glass having a white pigment or a cured layer of a polyester-type unsaturated resin is provided as a coated layer. In this case, when a polyester-type unsaturated resin is used as a resin component, a colour of a resin is generally a slightly yellowish white colour, and the resulting product has then a glazed milk-white colour, making it possible to provide a colour tone similar to that of natural milk-white marble. The coated layer is made to contain a colouring material such as a pigment, a dye or the like, and further an inorganic pigment such as titanium dioxide, zirconium silicate, manganese dioxide, iron oxide or cobalt oxide, an organic pigment such as an azo pigment or a phthalocyanine pigment, or various dyes are added to a resin component, making it possible to give a uniform colour and a deep, glazed peculiar colour tone.

In the artificial stone composition of the present invention, it is also possible to colour a product by mixing a coloured particulate component having approximately the same size as the fine powder component.

In any case, colour reproducibility can be achieved readily compared to conventional artificial stone, and a stone which is excellent in depth and a glaze without discolouration is obtained.

Further, it is especially effective that a glazing agent for colouring a porcelain or the like is coated onto a powder of a natural transparent fine powder component, and the coated material is baked to give a powder having a desired colour which is used as a fine powder component. When using this method, not only can a stable colour be provided, but also a wide range of colours can be selected.

When a component which is obtained by pulverizing a quartz-type natural stone and which is the same size as the fine powder component is used, coated with a glazing agent and baked, a reproducibility of a colour such as black or red is provided readily. With respect to a colour to be reproduced, not only the colour but also a glaze or a colour tone is completely reproduced. Accordingly, the colour becomes one which cannot be given by a usual colouring method.

At any rate, the fine powder component in which the coated layer is formed by this baking is used in an amount of from 10 to 100% based on the total amount of the fine powder component.

Further, in relation to the colour tone, a short fiber component may be incorporated for reinforcing the texture of the molded product. Examples thereof include glass fibers, ceramic fibers, metallic fibers, resin fibers and the like. Of these, glass fibers are preferable.

With respect to the short fibers, those having a diameter of from 10 to 100 μm and a length of from 1 to 10 mm are used in an amount of from 1 to 10% by weight of the fine powder component.

A cured slab into which is struck and integrated the above-mentioned artificial stone mixture is here described. This slab is one which has been cured, and the above-mentioned artificial stone mixture is struck and integrated thereinto upon placing or not placing the slab in a mold.

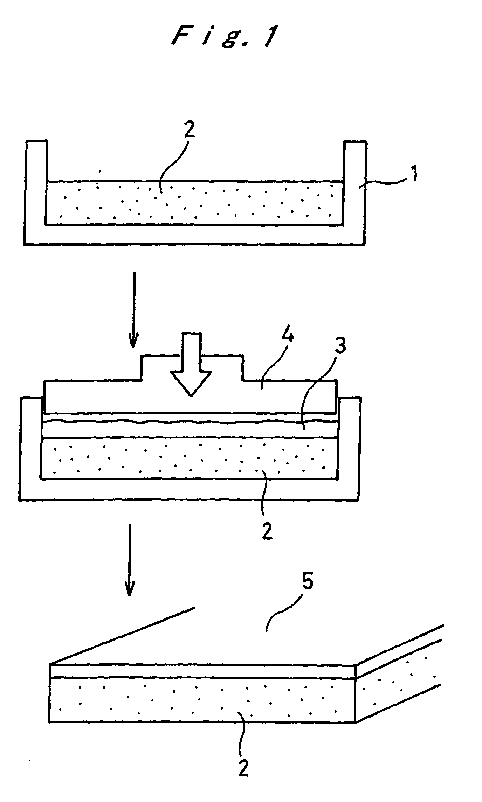

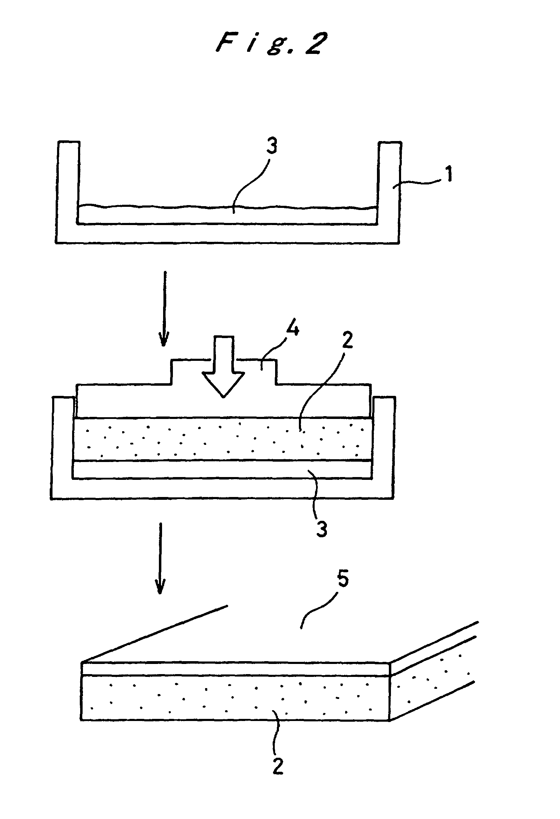

For example, Figure 1 illustrates a method in which the above-mentioned artificial stone mixture (3) is injected onto the above-mentioned cured slab (2) put in a mold (1), and cured by pressing the same using a press (4) to integrate the cured portion (5) into the cured slab (2). Further, Figure 2 illustrates a method in which the artificial stone mixture (3) is injected into the mold (1), and the cured slab (2) is placed thereon and likewise pressed using the press (4).

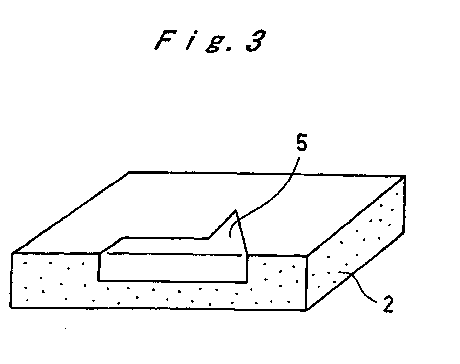

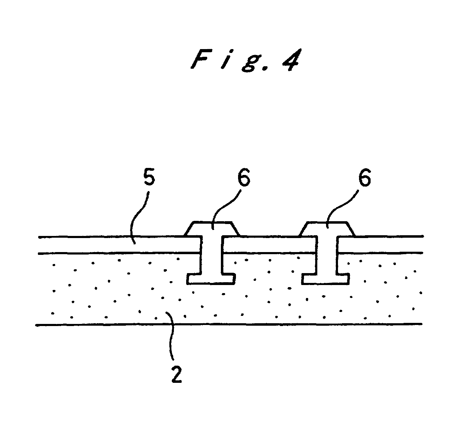

Of course, the method is not limited to the examples shown in Figures 1 and 2. As shown in Figure 3, it is also possible that the artificial stone mixture (3) is struck into a predetermined notch or groove formed in the cured slab (2) as if it were embedded therein and the cured portion (5) is integrated thereinto. As shown in Figure 4, it is further possible that the artificial stone mixture (3) is struck into the cured slab (2) having a metal body (6) of a predetermined shape or the like and the cured portion (5) is integrated thereinto. Thus, various methods are possible.

In any case, the cured slab (2) may include various compositions such as a cement type, a resin type, an inorganic cement type and the like. However, from the standpoint of the integration after the molding with the artificial stone mixture, namely, the adhesion, it is preferable that this cured slab contains a quality resin component. '

The inorganic material component, colour tone and the like of the cured slab are selected as required, and it can be composed of a less costly industrial material such as a blast furnace slab, a glass or the like.

Accordingly, an artificial stone having a certain thickness can be formed such that a less costly cured slab is used as a lining material, its thickness is increased, and only the surface layer is formed by striking the above-mentioned artificial stone mixture formed of the costly material.

Naturally, it is also possible that the cured slab is formed with the same composition as the artificial stone mixture, and the artificial stone mixture is struck and integrated thereinto. Unlike the adhesion of the cured bodies to each other, the integration is realized upon providing a great strength without using an adhesive.

The resin may be various thermosetting resins such as a methacrylic resin, an unsaturated polyester resin and the like. In these resins, a cured slab can be formed by using 60 to 90% by weight of the slab, of a blast furnace slab, a pulverized glass, various inorganic slabs obtained from an incinerator or the like as a substitute component of an aggregate or the like. The thickness of the cured slab relative to the thickness of the product formed by striking and integration varies depending on the use. For example, it may occupy approximately 95% of the overall plate thickness. Further, the cured slab may be formed with the same composition as the above-mentioned artificial stone mixture.

Still further, in the present invention, it goes without saying that a sandwich structure may be provided by striking the other artificial stone mixture (3) on the cured slab (2) in Figure 2.

In any of the above-mentioned cases, the surface formed from the artificial stone mixture is arranged to be a surface of a product.

Furthermore, in this description, an artificial stone obtained by previously forming a cured slab from the above-mentioned artificial stone mixture and striking and integrating a curable mixture corresponding to the cured slab, e.g. the blast furnace slab or the like into this cured slab is also intended in the invention, and the present invention provides this artificial stone.

In this structure, the artificial stone of the present invention can also be made to have a luminousness or a fluorescence. This can be conducted by blending the above-mentioned artificial stone mixture forming at least the surface of the artificial stone with a luminous or fluorescent component.

It is a practical characteristic feature that at least a part of the fine powder component as a structural component is baked or coated at room temperature with the above-mentioned luminous material or fluorescent material.

In the aggregate of the transparent inorganic material, especially, the baked coating of the fine powder component, a coating having a thickness of from several micrometers to several tens of micrometers, for example, from 5 to 50 μm, preferably from 20 to 40 μm is applied to the surface of the particle in the transparent fine powder component. More specifically, the coating is applied by the baking at a high temperature of from 120 to 1,200°C.

The fluorescent material to be baked can include various fluorescent materials which have a luminescence or which emit light through ultraviolet-light irradiation, such as strontium aluminate, zinc sulfide and the like.

The baking is conducted not by various known methods, but by mixing the aggregate of the transparent inorganic material, for example, the above-mentioned fine powder component with a dispersion or a paste having dispersed therein a fine powder of a luminescent material such as strontium aluminate or the like and drying the mixture.

The room-temperature coating is conducted also using a transparent sticky material (binder) as the paste.

In this construction, light irradiated from outside reaches the internal coating material. Further, when a methacrylic resin (MMA resin) having an excellent transparency is used as a resin component, light enters into the artificial stone.

Consequently, incident light is permeated into the inside, and light is emitted from inside. That is, the light absorption layer and the light-emitting layer become thick. For this reason, light can be stored for a short period of time, and a light-emitting efficiency is also increased.

Since only the surface of the fine powder component is coated, the luminous or fluorescent material is used in a small amount.

In the present invention, a luminous or fluorescent material of smaller than 0.147 mm (100 mesh) having a luminescence or a light-emitting property accompanied by ultraviolet absorption is directly contained as at least a part of the finely divided component. Typical examples thereof include a strontium aluminate luminescent material, zinc sulfide and the like.

The size of the finely divided component is much smaller than the 0.147 mm (100 mesh) level. The finely divided component enters between the individual particles of the fine powder component and is arranged to fill the space between the particles, contributing towards providing properties such as a hardness and a pliability of the resulting artificial stone.

The above-mentioned luminous or fluorescent component plays the same role as the finely divided component, contributing toward imparting a light function such as a luminousness or a fluorescence to the artificial stone.

With respect to the above-mentioned inorganic material component, the size and the amount are important.

The relationship of the weight ($W_1$) of the above-mentioned fine powder component of the inorganic material, the weight ($W_2$) of the finely divided component of the inorganic material and the weight ($W_3$) of the luminous or fluorescent component is as follows.

$$W_1 : (W_2 + W_3) = 1:2 \text{ to } 5:1$$

$$W_2 : W_3 = 1:2 \text{ to } 10:1$$

With respect to $W_1 : (W_2 + W_3)$, it is preferably between 1:1 and 4:1. With respect to $W_2 : W_3$, it is preferably between 1:1 and 5:1.

In the fine powder component of the inorganic material, it is advisable that the amount of the fine powder component of the transparent inorganic material therein has preferably the following relationship

$$(0.3 \text{ to } 1.0)W_1 .$$

The above-mentioned facts are required to realize physical properties as an artificial stone, such as strength, hardness, density and the like, and a light function such as a luminousness or a fluorescence.

The light function of the luminous or fluorescent artificial stone is realized in such a manner that

1) from 30 to 100% by weight of the fine powder component of the inorganic material is a fine powder of a transparent inorganic material, and from 30 to 100% by weight of the finely divided component of the inorganic material is a finely divided component of a transparent inorganic material, and

2) a luminous or fluorescent component of smaller than 0.147 mm (100 mesh) is mixed at the above-mentioned specific amounts. Thus, the product is excellent in luminousness and economic in view of the use of minor amounts of expensive luminous or fluorescent component.

The reason is as follows. The use of a fine powder component of a transparent inorganic material and further a finely divided component as a transparent aggregate helps permeate light irradiated from outside into the inside of the artificial stone. Light is efficiently absorbed in the luminous or fluorescent component, and the fluorescent layer having dispersed therein the luminous or fluorescent component formed of the luminescent material or-the like is secured as a great thickness including the inside of the artificial stone, so that a high luminosity can be maintained for a long period of time. In the light emission, the fine powder component of the transparent inorganic material comes to have a high luminosity because it is good in a light transmission.

A process for producing the artificial stone of the present invention by striking and integrating the artificial stone mixture into the cured slab is realized by conducting the compression molding through, for example, pressing at a surface pressure of from 5 to 100 kgf/cm$^2$ in the above-mentioned press-molding. In this molding, it is preferable to conduct heating at a temperature of from approximately 90 to 140°C for from 5 to 20 minutes in the compression.

Further, in the compression molding with heating, vibration is applied to a mold along with a pressure, making it possible to improve a fluidity of the above-mentioned mixing material in the mold.

This process using such a compression molding is suitable for mass-production of a product with a relatively simple shape, such as a flat molded product, and there is almost no loss of a material, so that the process is economically excellent too.

In the present invention, the cured surface of the artificial stone mixture after the molding may be polished or roughened to expose the finely divided component to the surface.

To roughen the surface, a method involving selectively removing the resin component is employed. It is effective, for example, that after the product is removed from the mold, high- pressure water is jetted on the surface of the molded product to conduct the texture treatment.

Since this treatment varies depending on various conditions such as thickness of the jet, distance of the surface from the nozzle, and the like, it is not limitative. However, usually, in the case of a jet thickness of from 2 to 20 cm, a water pressure of from 50 to 1,400 kg/cm$^2$ may be applied from a nozzle height of from 2 to 50 cm. This water pressure is far lower than when a natural stone is used.

This is because the high-quality treatment can be conducted more easily in the presence of a resin component.

A nozzle for jetting high-pressure water or its system is not particularly limited. Various types are employable.

The surface is flattened or roughened using the water jet in the texture treatment to produce an artificial stone having a deep quality.

The presence of the resin component does not make the surface cloudy, and makes easy the treatment of a waste water in comparison to an etching method using chemicals.

Naturally, the surface can be treated with an organic solvent as required to soften or melt the resin component and partially remove the same.

In this case, the organic solvent corresponding to the resin component may be selected from for example halogenated hydrocarbons such as methylene chloride and chloroform, carboxylic acids and esters thereof such as acetic anhydride, ethyl acetate and butyl acetate, acetone, tetrahydrofuran, DMF and DMSO.

The molded product is dipped in these organic solvents or these organic solvents are sprayed thereon or caused to flow down thereon to remove the resin component whereby an uneven surface can be formed.

Alternatively, the uneven surface may be formed by scratching the resin component having a low hardness from the surface with a wire brush, a cutting means or the like.

The surface is roughened by the above-mentioned methods, and the texture is treated. Then, the resulting surface is polished to partially break the coated layer of the fine powder component on the surface and expose both the coated layer and the particles of the fine powder component to the surface of the product in sections. Then, a peculiar deep, glazed surface quality is realized.

Any means for surface polishing may be employed. It can be conducted using a tool such as a grindstone, a polishing cloth, a polishing belt or the like, or a polishing agent such as a buff polishing agent, a rubbing compound or the like.

As the polishing agent, diamond, boron carbide, corundum, alumina and zirconia which have mainly a polishing action, and tripoli, dromite, alumina, chromium oxide and cerium oxide which have mainly a scratching action are used as required.

Of course, after such a polishing is applied, the surface may further be roughened to form raisings and depressions.

In this manner, the artificial stone having an excellent texture, excellent qualities and light-emitting properties is produced.

The present invention is illustrated by referring to the following Examples.

## EXAMPLE

### Control Example 1

A composition comprising 60% by weight of a blast furnace slag, 30% by weight of a pulverized natural stone having an average particle diameter of 10 mesh and 10% by weight of methyl methacrylate (containing a curing agent) was compression-molded in a mold. A cured slab having a thickness of 12 mm was obtained.

This was placed into a mold as shown in Figure 1.

A natural silica rock having a particle diameter of from 0.68 to 1.7 mm (10 to 25 mesh) in which a baked surface layer with a thickness of approximately 30μm had been formed at approximately 1,000°C using a white glazing agent was used in an amount of 50% by weight based on the total fine powder component. The fine powder component and aluminum hydroxide of 0.066 mm (230 mesh) at the weight ratio of 2:1 were uniformly mixed in amounts of 90% by weight based on the total amount of the composition with 9% by weight of a methyl methacrylate monomer and 1% by weight of a curing agent to form a mortar-like artificial stone mixture.

This mixture was charged on a cured slab in a mold, and compressed at a temperature of 110°C and a surface pressure of 30 kgf/cm$^2$ for 15 minutes to form a plate having a thickness of approximately 15 mm.

Subsequently, the surface cured from the artificial stone mixture was polished using a corundum polishing agent. Consequently, in the fine powder component having the baked coated layer, the partial sections of the baked layer and the fine powder component were exposed to the surface.

The resulting artificial stone had a deep milk-white color and a glaze of marble, and was free from bubbles in the inside or the surface. Thus, the composition was uniform.

The adhesion between the cured slab and the cured portion of the artificial stone mixture was satisfactory in the strength.

In a test according to JIS K-7112, the specific gravity was 2.02 Further, the water absorption was 0.10%. The other properties are as shown in Table 1 below.

Table 1

| Item | Results | Test conditions |
| --- | --- | --- |
| Bending strength | 30.28 kgf/cm | according to JIS A5209 |
| Compression strength | 1180 kgf/cm$^2$ | Crosshead speed 0.5 mm/min Load cell 2 tons |
| Impact strength | 3.78 kgf·cm/cm$^2$ | Pendulum impact test |
| Hardness | 976 kgf/mm$^2$ | Vickers hardness according to JIS Z-2244 |
| Linear expansion coefficient | 0.68 (x 10$^{-5}$K) | TMA (30 to 100°C) |
| Abrasion resistance | 0.02 g | JIS A-5209 sand dropping-type abrasion test |

When the resulting product was used as a wall plate of a building, a wall having a deep, beautiful color tone of marble could be obtained. The production cost as an artificial stone product could be reduced to approximately 1/30 that of the plate 15 mm thick which was obtained without using the above-mentioned cured slab.

Example 2

A plate was obtained as in Example 1 using the following artificial stone mixture.

That is, a natural silica rock having a particle diameter of from 0.68 to 1.7 mm (10 to 25 mesh) in which a baked surface layer with a thickness of approximately 30 μm had been formed at approximately 1,000°C using a strontium alminate luminescent material was used in an amount of 50% by weight based on the total fine powder component. The fine powder component and calcium carbonate having an average particle diameter of 0.066 mm (230 mesh) at a weight ratio of 2:1 were uniformly mixed in amounts of 89% by weight based on the total amount of the composition with 11% by weight of a methyl methacrylate (MMA) and 1.5% by weight, based on the MMA weight, of a curing agent to form a mortar-like artificial stone mixture.

This mixture was charged, and molded into a plate having a thickness of approximately 15 mm.

Subsequently, the surface was polished using a diamond grindstone and a silicon carbide•magnesia grindstone Consequently, in the fine powder component having the baked coated layer, the partial sections of the baked layer and the fine powder component were exposed to the surface.

The resulting artificial stone exhibited light-storing/light-emitting properties such as a luminousness in the overall thickness direction, had a deep milk-white color and a glaze of marble even in the daytime, and was free from bubbles in the inside or the surface. Thus, the composition was uniform.

In a test according to JIS K-7112, the specific gravity was 2.02. Further, the water absorption was 0.10%. The other properties are as shown in Table 2 below.

Table 2

| Item | Results | Test conditions |
| --- | --- | --- |
| Bending strength | 30.15 kgf/cm | according to JIS A5209 |
| Compression strength | 1058 kgf/cm$^2$ | Crosshead speed 0.5 mm/min Load cell 2 tons |
| Impact strength | 3.81 kgf•cm/cm$^2$ | Pendulum impact test |
| Hardness | 985 kgf/mm$^2$ | Vickers hardness according to JIS Z-2244 |
| Linear expansion coefficient | 0.69 (x 10$^{-5}$K) | TMA (30 to 100°C) |

Table 2 (continued)

| Item | Results | Test conditions |
|---|---|---|
| Abrasion resistance | 0.03 g | JIS A-5209 sand dropping-type abrasion test |

Further, no abnormality was observed even in tests for an acid resistance and an alkali resistance by the dipping in a 3% hydrochloric acid aqueous solution for 8 hours and the dipping in a 3% sodium hydroxide aqueous solution for 8 hours.

When the resulting product was used as a wall plate of a building, a wall having a deep, beautiful color tone of marble could be obtained.

Example 3

A transparent glass having a particle diameter of from 5 to 50 mesh in which a baked surface layer had been formed with a thickness of approximately 40 µm at 700°C using a strontium aluminate-type luminescent material was used in an amount of 40% by weight based on the total fine powder component. The fine powder component and a natural silica rock powder having an average particle diameter of 0.061 mm 250 mesh) at the weight ratio of 2:1 were uniformly mixed in amounts of 87% based on the total amount of the composition with 13% by weight of methyl methacrylate (containing 2.0% by weight of a peroxide-type curing agent). The mixture in a necessary amount was charged into a mold such that a thickness after the curing became 3 mm as shown in Fig. 2.

Subsequently, a cured slab 10 mn thick which had been cured was placed on this artificial stone mixture. This cured slab was formed from 30% by weight of a blast furnace slag, 20% by weight of a glass powder, 30% by weight of a pulverized natural stone and 20% by weight of methyl methacrylate (containing a curing agent) through compression molding.

After the cured slab was placed thereon, molding by pressing and heating was conducted to form a plate having a thickness of 13 mm.

Then, the surface was polished using a diamond grindstone and a silicon carbide magnesia grindstone. Further, only the resin portion on the surface was removed at a water jet pressure of 1,100 kg/cm$^2$ (nozzle diameter 0.75 mm, a jet distance 40 mm).

The resulting artificial stone had depth and a non-slip property in the daytime, and could be seen in the overall thickness direction at night for a long period of time because of the luminescence.

It could be used as a luminous guide mark building material in urgent power failure and thus as an effective artificial stone.

The adhesion strength of the adhered portion between the cured portion from the artificial stone mixture and the cured slab was great, and not problematic practically.

Example 4

The following components were uniformly mixed to form a mortar.

| | (% by weight) |
|---|---|
| Transparent natural silica rock<br>    0.021 to 1.7 mm (10 to 70 mesh) | 50 |
| Aluminum oxide<br>    (average particle diameter 0.067 mm (220 mesh)) | 10 |
| Transparent silica rock powder<br>    (average particle diameter 0.075 mm (200 mesh)) | 10 |
| Strontium aluminate luminescent material<br>    (average particle diameter 0.075 mm (200 mesh)) | 20 |
| Methyl methacrylate (MMA)<br>    (containing a 0.15% peroxide-type MMA curing agent) | 10 |

The resulting mixture was charged into a mold, and molded into a plate having a thickness of 3 mm.

This plate was placed in the mold, and a curable mixture having the following composition was poured thereon.

| Blast furnace slag | 30% by weight |
|---|---|

(continued)

| Glass powder | 10% by weight |
| Pulverized natural stone | 40% by weight |
| Methyl methacrylate (containing a curing agent) | 20% by weight |

After the pouring, compression was conducted at a temperature of 110°C and a surface pressure of 40 kgf/cm$^2$ for 20 minutes.

A plate artificial stone having a thickness of 14 mm was obtained through this compression.

Then, the surface of this artificial stone was polished using a diamond grindstone and a silicon carbide•magnesia grindstone to adjust the thickness to 10 mm.

The resulting artificial stone exhibited light-storing/light-emitting properties such as a luminousness in the overall thickness direction, had a deep milk-white color and a glaze of marble even in the daytime, and was free from bubbles in the inside or the surface. Thus, the composition was uniform.

In a test according to JIS K-7112, the specific gravity was 1.98. Further, the water absorption was 0.10%. The other properties are as shown in Table 3 below.

Table 3

| Item | Results | Test conditions |
|------|---------|-----------------|
| Bending strength | 29.97 kgf/cm | according to JIS A5209 |
| Compression strength | 1185 kgf/cm$^2$ | Crosshead speed 0.5 mm/min Load cell 2 tons |
| Impact strength | 4.08 kgf•cm/cm$^2$ | Pendulum impact test |
| Hardness | 997 kgf/mm$^2$ | Vickers hardness according to JIS Z-2244 |
| Linear expansion coefficient | 0.69 (x 10$^{-5}$K) | TMA (30 to 100°C) |
| Abrasion resistance | 0.02 g | JIS A-5209 sand dropping-type abrasion test |

Further, no abnormality was observed even in tests for an acid resistance and an alkali resistance by the dipping in a 3% hydrochloric acid aqueous solution for 8 hours and the dipping in a 3% sodium hydroxide aqueous solution for 8 hours.

When the resulting product was used as a wall plate of a building, a wall having a deep, beautiful color tone of marble could be obtained. Further, light stored from the sun in the daytime in fine weather maintained its effect with the high luminosity at night for a long period of time. A good quality was provided owing to the light-emitting portions having a thickness.

Example 5

In the formulation of Example 4, a ratio of a silica rock powder was changed to 20%, a ratio of a strontium aluminate-type luminescent material to 10%, a ratio of a natural silica rock to 62% and a ratio of methyl methacrylate (MMA) to 8% respectively, and the components were uniformly mixed. The mixture was molded into a plate having a thickness of 14 mm.

Then, the surface was polished using a diamond grindstone and a silicon carbide magnesia grindstone. Further, only the resin portion on the surface was removed at a water jet pressure of 1,100 kg/cm$^2$ (nozzle diameter 0.75 mm, a jet distance 40 mm).

The resulting artificial stone had depth and a non-slip property in the daytime, and could be seen in the overall thickness direction at night for a long period of time because of the luminescence.

It could be used as a luminous guide mark building material in urgent power failure and thus as an effective artificial stone.

INDUSTRIAL APPLICABILITY

As stated above, the present invention provides a high-density artificial stone which has a deep, glazed excellent color tone that has not been provided so far as well as good characteristics at quite low costs. The resulting product is of a uniform quality which has not been found in a natural product. Besides, such an excellent product can be produced without using a special costly equipment.

Especially, the artificial stone of the present invention is suitable for providing a granite tone or a marble tone, and it can be used in the same manner as a natural stone. Further, a function of a luminousness comes to be realized.

The product can be used in a wall material, a floor material, a pillar or the like as a deep, high-quality product in a wider range than a natural product.

**Claims**

1. An artificial stone comprising an artificial stone mixture containing an inorganic material mixture component comprising a fine powder component of an inorganic material having a size of from 0.201 to 4 mm (5 to 70 mesh), a finely divided component of an inorganic material of smaller than 0.147 mm (100 mesh) and a resin monomer component in which the sum of the fine powder component of the inorganic material and the finely divided component of the inorganic material is 89% by weight or more based on the weight of the stone mixture, the amount of resin monomer component is 11% by weight or less based on the weight of the stone mixture; the finely divided component of an inorganic material comprises a luminous or fluorescent material and wherein the relationship of the weight ($W_1$) of the above-mentioned fine powder component of the inorganic material, the weight ($W_2$) of the finely divided component of the inorganic material and the weight ($W_3$) of the luminous or fluorescent component is as follows

$$W_1 : (W_2 + W_3) = 1:2 \text{ to } 5:1$$

$$W_2 : W_3 = 1: 2 \text{ to } 10:1;$$

said stone mixture being struck and integrated into a cured slab.

2. The artificial stone as claimed in claim 1 wherein the cured slab has a resin monomer component or is formed of a cement-type material.

3. The artificial stone as claimed in claim 1 to 2, wherein the resin monomer component is a methacrylate ester.

4. The artificial stone as claimed in claim 1 or 3, wherein the cured slab contains blast furnace slag or glass

5. The artificial stone as claimed in claim 1 to 4, wherein the surface of a part or the whole of the fine powder component of the inorganic material has an inorganic material layer or an organic material layer which has been coated and cured.

6. The artificial stone as claimed in claim 5, wherein the coated cured surface layer has a thickness of from 5 to 50 $\mu$m.

7. The artificial stone as claimed in claim 5 or 6, wherein at least 10%, based on the total amount of the fine powder component has a coated cured surface layer.

8. The artificial stone as claimed in claim 5 to 7, wherein the fine powder component has a coated cured surface layer which is baked with a water glass, a pigment-containing water glass or a glazing agent for porcelain or is coated with a pigment-containing resin.

9. The artificial stone as claimed in claim 1 to 8, wherein the fine powder component and the finely divided component are contained at a weight ratio of from 0.5:1 to 5:1.

10. The artificial stone of claim 1 to 9, wherein at least a part of the fine powder component is a transparent inorganic material of which the surface is baked with a luminous or fluorescent material or coated therewith at room temperature.

11. The artificial stone of claim 10, wherein the transparent inorganic material is a glass or silica rock.

12. The artificial stone as claimed in claim 1 to 11, wherein at least a part of the fine powder component is a luminous or fluorescent material.

13. The artificial stone as claimed in claim 10, wherein a ratio of from 5 to 40% by weight of the finely divided component of the inorganic material is a luminous or fluorescent material.

14. The artificial stone as claimed in claim 1 or 3, wherein the curable mixture contains a blast furnace slag or a glass and/or a resin component.

15. A process for the preparation of an artificial stone as claimed in claim 1 comprising striking and integrating into a cured slab an artificial stone mixture as defined in claim 1.

**Patentansprüche**

1. Künstlicher Stein, der eine künstliche Steinmischung umfasst, enthaltend eine anorganische Materialmischungskomponente umfassend eine feine Pulverkomponente eines anorganischen Materials mit einer Größe von 0,201 bis 4 mm (5 bis 70 mesh), eine fein zerteilte Komponente eines anorganischen Materials, die kleiner als 0.147 mm (100 mesh) ist und eine Harzmonomerkomponente, in welcher die Summe der feinen Pulverkomponente des anorganischen Materials und die fein zerteilte Komponente des anorganischen Materials 89 Gew.-% oder mehr auf Grundlage des Gewichts der Steinmischung beträgt, die Menge der Harzmonomerkomponente 11 Gew.-% oder weniger auf Grundlage des Gewichts der Steinmischung beträgt; wobei die fein zerteilte Komponente eines anorganischen Materials ein lumineszierendes oder fluoreszierendes Material umfasst und wobei das Verhältnis des Gewichts ($W_1$) der oben genannten feinen Pulverkomponente des anorganischen Materials, das Gewicht ($W_2$) der fein zerteilten Komponente des anorganischen Materials und das Gewicht ($W_3$) der lumineszierenden oder fluoreszierenden Komponente wie folgt ist

$$W_1 : (W_2 + W_3) = 1 : 2 \text{ bis } 5 : 1$$

$$W_2 : W_3 = 1 : 2 \text{ bis } 10 : 1;$$

wobei die Steinmischung angelassen und in eine abgebundene Platte integriert wird.

2. Künstlicher Stein gemäß Anspruch 1, wobei die abgebundene Platte eine Harzmonomerkomponente aufweist oder aus einem zementartigen Material ausgebildet ist.

3. Künstlicher Stein gemäß Anspruch 1 bis 2, wobei die Harzmonomerkomponente ein Methacrylatesther ist.

4. Künstlicher Stein gemäß Anspruch 1 oder 3, wobei die abgebundene Platte Hochofenschlacke oder Glas enthält.

5. Künstlicher Stein gemäß Anspruch 1 bis 4, wobei die Oberfläche eines Teils oder des gesamten der feinen Pulverkomponente des anorganischen Materials eine anorganische Materialschicht oder eine organische Materialschicht aufweist, welche beschichtet und abgebunden wurde.

6. Künstlicher Stein gemäß Anspruch 5, wobei die beschichtete, abgebundene Oberflächenschicht eine Dicke von 5 bis 50 μm aufweist.

7. Künstlicher Stein gemäß Anspruch 5 oder 6, wobei zumindest 10% auf Grundlage der Gesamtmenge der feinen Pulverkomponente eine beschichtete, abgebundene Oberflächenschicht aufweist.

8. Künstlicher Stein gemäß Anspruch 5 bis 7, wobei die feine Pulverkomponente eine beschichtete, abgebundene Oberflächenschicht aufweist, welche mit einem Wasserglas, einem pigmenthaltigen Wasserglas oder einem Glasierungsmittel für Porzellan gebacken oder mit einem pigmenthaltigen Harz beschichtet ist.

9. Künstlicher Stein gemäß Anspruch 1 bis 8, wobei die feine Pulverkomponente und die fein zerteilte Komponente in einem Gewichtsverhältnis von 0,5 : 1 bis 5 : 1 enthalten sind.

10. Künstlicher Stein gemäß Anspruch 1 bis 9, wobei zumindest ein Tell der feinen Pulverkomponente ein transparentes anorganisches Material ist, dessen Oberfläche mit einem lumineszierenden oder fluoreszierenden Material gebacken oder bei Raumtemperatur mit dieser beschichtet ist.

11. Künstlicher Stein gemäß Anspruch 10, wobei das transparente anorganische Material ein Glas- oder Siliziumdioxid-Stein ist.

12. Künstlicher Stein gemäß Anspruch 1 bis 11, wobei zumindest ein Teil der feinen Pulverkomponente ein lumineszierendes oder fluoreszierendes Material ist.

13. Künstlicher Stein gemäß Anspruch 10, wobei ein Verhältnis von 5 bis 40 Gew.-% der fein zerteilen Komponente des anorganischen Materials ein lumineszierendes oder fluoreszierendes Material ist.

14. Künstlicher Stein gemäß Anspruch 1 oder 3, wobei das abbindende Gemisch eine Hochofenschlacke oder eine Glas- und/oder eine Harzkomponente enthält.

15. Verfahren zur Herstellung eines künstlichen Steins gemäß Anspruch 1, umfassend Anlassen und Integrieren in eine abgebundene Platte einer künstlichen Steinmischung, wie in Anspruch 1 angegeben.

**Revendications**

1. Pierre artificielle comprenant un mélange constituant la pierre artificielle contenant un composant constitué d'un mélange de matières inorganiques, comprenant un composant constitué d'une poudre fine d'une matière inorganique, ayant une granulométrie de 0,201 à 4 mm (5 à 70 mesh), un composant finement divisé d'une matière inorganique de moins de 0,147 mm (100 mesh) et un composant constitué d'un monomère de résine, dans laquelle la somme du composant constitué d'une poudre fine de la matière inorganique et du composant finement divisé de la matière inorganique est de 89 % en poids ou plus, sur la base du poids du mélange constituant la pierre, la quantité du composant constitué d'un monomère de résine est de 11 % en poids ou moins, sur la base du poids du mélange constituant la pierre ; le composant finement divisé d'une matière inorganique comprend une matière lumineuse ou fluorescente, et dans laquelle la relation entre le poids ($W_1$) du composant précédemment mentionné constitué d'une poudre fine de la matière inorganique, le poids ($W_2$) du composant finement divisé de la matière inorganique et le poids ($W_3$) du composant lumineux ou fluorescent est la suivante :

$$W_1 : (W_2 + W_3) = 1:2 \text{ à } 5:1$$

$$W_2 : W_3 = 1:2 \text{ à } 10:1 ;$$

ledit mélange constituant la pierre étant projeté et intégré dans une dalle durcie.

2. Pierre artificielle selon la revendication 1, dans laquelle la dalle durcie a un composant constitué d'un monomère de résine ou est formée par une matière du type ciment.

3. Pierre artificielle selon la revendication 1 ou 2, dans laquelle le composant constitué d'un monomère de résine est un ester de méthacrylate.

4. Pierre artificielle selon la revendication 1 ou 3, dans laquelle la dalle durcie contient du laitier de haut fourneau ou du verre.

5. Pierre artificielle selon les revendications 1 à 4, dans laquelle la surface d'une partie ou de la totalité du composant constitué d'une poudre fine de la matière inorganique a une couche de matière inorganique ou une couche de matière organique qui a été appliquée et durcie.

6. Pierre artificielle selon la revendication 5, dans laquelle la couche de surface appliquée durcie a une épaisseur de 5 à 50 µm.

**7.** Pierre artificielle selon la revendication 5 ou 6, dans laquelle au moins 10%, sur la base de la quantité totale du composant constitué d'une poudre fine a une couche de surface appliquée durcie.

**8.** Pierre artificiel selon les revendications 5 à 7, dans laquelle le composant constitué d'une poudre fine a une couche de surface appliquée durcie qui est cuite avec un verre soluble, un verre soluble contenant des pigments ou un agent de vernissage pour porcelaine et est revêtu d'une résine contenant des pigments.

**9.** Pierre artificielle selon les revendications 1 à 8, dans laquelle le composant constitué d'une poudre fine et le composant finement divisé sont contenus dans un rapport de poids de 0,5:1 à 5:1.

**10.** Pierre artificielle selon les revendications 1 à 9, dans laquelle au moins une partie du composant constitué d'une poudre fine est une matière inorganique transparente dont la surface est cuite avec une matière lumineuse ou fluorescente ou revêtue de celle-ci à la température ambiante.

**11.** Pierre artificielle selon la revendication 10, dans laquelle la matière inorganique transparente est un verre ou une roche siliceuse.

**12.** Pierre artificielle selon les revendications 1 à 11, dans laquelle au moins une partie du composant constitué d'une poudre fine est une matière lumineuse ou fluorescente.

**13.** Pierre artificielle selon la revendication 10, dans laquelle un rapport de 5 à 40% en poids du composant finement divisé de la matière inorganique est une matière lumineuse ou fluorescente.

**14.** Pierre artificielle selon la revendication 1 ou 3, dans laquelle le mélange durcissable contient un laitier de haut fourneau ou un verre et/ou un composant constitué d'une résine.

**15.** Procédé de préparation d'une pierre artificielle selon la revendication 1, consistant à projeter et intégrer dans une dalle durcie un mélange constituant une pierre artifcielle selon la revendication 1.

Fig. 1

## F i g. 2

# Fig. 3

# *Fig. 4*